# EUROPÄISCHE PATENTANMELDUNG

(11) **EP 2 667 014 A2**
(43) Veröffentlichungstag der Anmeldung: **27.11.2013**
(21) Anmeldenummer: 13168498.7
(22) Anmeldetag: 21.05.2013
(51) Int. Cl.: F03B 7/00

(54) **Wasserradanlage**

(30) Priorität: 22.05.2012 AT 6052012
(71) Anmelder: Berthiller, Franz, 3474 Altenwörth (AT); Knorr, Michael, 2102 Bisamberg (AT)
(72) Erfinder: Berthiller, Franz, 3474 Altenwörth (AT); Knorr, Michael, 2102 Bisamberg (AT)
(74) Vertreter: Müllner, Martin

(57) **Zusammenfassung**

Die Erfindung betrifft eine Wasserradanlage für den Einsatz als unterschlächtiges oder mittelschlächtiges Wasserrad, umfassend ein drehbar an einer Welle (6) gelagertes Schaufelrad, wobei durch einzelne Schaufeln Aufnahmekammern (2) für die einströmende Flüssigkeit gebildet sind, und wobei die Kraftübertragung über die Welle (6) des Wasserrads auf zumindest einen Generator übertragbar ist. In jeder Kammer (2) ist eine luftdichte Membran (4) angeordnet, wobei durch die Gesamtheit der luftdichten Membranen (4) ein luftdichter Mantel um das Wasserrad gebildet ist, in welchem die Luft zwischen den Kammern (4) frei strömen kann, und wobei in dem Mantel ein Luftdruck herrscht, welcher es erlaubt, dass die Membran (4) in der jeweiligen Kammer (2), in welcher die Flüssigkeit einströmt, in Richtung des Kammergrunds komprimierbar ist und gleichzeitig durch Umverteilung der Luft im Mantel die Membran (4) in der Kammer (2), in welcher die Flüssigkeit ausströmt, nach außen in die Ausgangslage bewegbar ist, wodurch das Ausströmen der Flüssigkeit aus der jeweiligen Kammer (2) begünstigt ist.

## Beschreibung

### Technisches Gebiet

Die Erfindung betrifft eine Wasserradanlage für den Einsatz als unterschlächtiges oder mittelschlächtiges Wasserrad, umfassend ein drehbar an einer Welle gelagertes Schaufelrad, wobei durch einzelne Schaufeln Aufnahmekammern für die einströmende Flüssigkeit gebildet sind, und wobei die Kraftübertragung über die Welle des Wasserrads auf zumindest einen Generator übertragbar ist, und wobei in jeder Kammer eine luftdichte Membran angeordnet ist.

### Stand der Technik

Wasserräder sind seit langem bekannt und es ist ein allgemein bekannter Effekt, dass bei Wasserrädern gegenüber von Turbinen die Stauhöhe geringer sein kann. In Fällen wo sich eine Kaplanturbine beispielsweise nicht mehr rechnet oder der Fluss nicht höher aufgestaut werden kann, rechnet sich der Einsatz von Wasserrädern. Da aber Wasserräder gegenüber Turbinen einen weit geringeren Wirkungsgrad haben, ist es wünschenswert diesen Wirkungsgrad so weit wie möglich zu verbessern.

Ein bekanntes Problem bei Wasserrädern ist das Anheben des Wassers beim Auslass durch den in den Schaufeln entstehenden Unterdruck. Es sind im Stand der Technik mehrere Lösungen für dieses Problem bekannt, wie beispielsweise das Vorsehen beweglicher Schaufeln oder Blätter. Diese Verstellmöglichkeiten führen jedoch zu einem hohen Verschleiß und der Wartungsanfälligkeit der Anlage. Andere Lösungen setzen Lamellen ein, welche zwar das Wasser schneller auslassen, jedoch nicht die volle Kapazität des Wassers ausnützen können, da das Wasser durch die Lamellen spritzt. Gute Wasserräder erreichen mit diesen Lösungen höchstens einen Wirkungsgrad von 75%.

### Kurzbeschreibung der Erfindung

Ziel der vorliegenden Erfindung ist es, den Wirkungsgrad der Wasserräder weiter zu verbessern und insbesondere das Anheben des Wassers am Auslass zu verhindern, wodurch Energieverluste an dieser Stelle vermieden werden können.

Gelöst wird diese Aufgabe dadurch, dass durch die Gesamtheit der luftdichten Membranen ein luftdichter Mantel um das Wasserrad gebildet ist, in welchem die Luft zwischen den Kammern frei strömen kann, und wobei in dem Mantel ein Luftdruck herrscht, welcher es erlaubt, dass die Membran in der jeweiligen Kammer, in welcher die Flüssigkeit einströmt, in Richtung des Kammergrunds komprimierbar ist und gleichzeitig durch Umverteilung der Luft im Mantel die Membran in der Kammer, in welcher die Flüssigkeit ausströmt, nach außen in die Ausgangslage bewegbar ist, wodurch das Ausströmen der Flüssigkeit aus der jeweiligen Kammer begünstigt ist.

Durch diese Einrichtung ist es möglich, dass das Wasser effektiv an der Unterseite über die Schaufeln vorbeigeführt werden kann und durch das Ausdehnen der Membran in der jeweiligen Auslasskammer kein Unterdruck entsteht, sondern das darin befindliche Wasser aus der Kammer herausgedrückt wird. Das herausdrücken erfordert keinen zusätzlichen Energieaufwand, da die Luft im Mantel nur umverteilt wird und durch das Komprimieren der Membran in der einströmenden Kammer, der nötige Druck aufgebaut wird.

Es ist ein weiters Merkmal der Erfindung, dass der Druck im luftdichten Mantel durch einen angeschlossenen Kompressor steuerbar ist. Durch den Kompressor kann je nach Stauhöhe und dadurch vorhandenem Wasserdruck der Überdruck um Mantel reguliert werden. Beispielsweise herrscht im Mantel ein Überdruck von 0,1-0,3 bar.

Gemäß einem weiteren Merkmal der Erfindung ist es vorgesehen, dass im Inneren jeder Kammer abgerundete Vorsprünge angeordnet sind, welche ein Rückfalten der Membranen und das Ausbilden von Knickstellen in den Membranen beim Komprimieren verhindern. Die Vorsprünge können auch gleichzeitig dazu eingesetzt werden, um die Membran zwischen einem Vorsprungsteil und dem Kammerboden einzuklemmen und so in der Kammer zu fixieren.

Ferner ist es ein Merkmal der Erfindung, dass das Wasserrad auf einer Hohlwelle montiert ist, welche in ihrem Inneren ein Getriebe aufweist, welches mit einer zentralen Welle in Verbindung steht und die Drehzahl der Hohlwelle, in Richtung der zentralen Welle hin erhöht, wobei das Getriebe vorzugsweise durch ein Umlaufrädergetriebe mit mindestens drei Umlaufrädern gebildet ist. Im Allgemeinen ist die Drehgeschwindigkeit des Wasserrads eher gering, wobei jedoch ein sehr starkes Drehmoment auf eine oft kleine Mittelwelle übertragen wird. Diese ist daher hohen Belastungen ausgesetzt. Durch das vorsehen eines Getriebes zur Übersetzung der langsamen Bewegung einer größeren Hohlwelle auf der das Wasserrad montiert ist auf eine kleine sich schneller drehende Welle im Zentrum des Wasserrads, kann das Drehmoment an dieser zentralen Welle verringert werden, was für den Verschleiß vorteilhaft ist.

Es ist ein weiteres Merkmal der Erfindung, dass auf der zentralen Welle mehrere Generatoren in der Wellenflucht hintereinander angeordnet sind und separat oder gemeinsam mit der Welle koppelbar sind. Beispielsweise kann ein Generator, welcher 35% Leistung abnimmt und einer welcher 65% Leistung abnimmt, vorgesehen sein. Bei geringem Wasseranfall kann der kleinere Generator betrieben werden. Bei steigendem Wasseranfall dann der andere und schließlich beide zusammen.

Gemäß einem weiteren Merkmal der Erfindung ist ein an der Anlage angeordnetes Schott vorgesehen, welches im Wesentlichen aus einem konzentrisch zum Wasserrad angeordneten Zylinderabschnitt gebildet wird, wobei das Schott bevorzugt über die Welle oder die Lagerung des Wasserrads an der Anlage schwenkbar montiert ist, und wobei durch Schwenken des Schotts die Stauhöhe sowie die Durchflussmenge der Flüssigkeit regulierbar ist. Die Anlage kann somit als kompaktes Modul installiert werden, was den Aufbau der Anlage kostengünstiger macht..

Schließlich ist es ein Merkmal der Erfindung, das die gesamte Wasserradanlage höhenverstellbar angeordnet ist, wodurch die Anlage an unterschiedliche Pegelstände anpassbar ist und bei Hochwasser aus dem Strömungslauf durch Anheben entfernbar ist. Die Anlage kann dadurch das ganze Jahr über optimal genutzt werden, da sie einerseits an Niedrigwasser angepasst werden kann und andererseits bei Hochwasser aus dem Wasser gehoben werden kann und somit vor Beschädigungen geschützt ist.

Ferner ist es ein weiteres Merkmal der Erfindung, dass vor dem Flüssigkeitszulauf des Wasserrads Beschleunigerelemente angeordnet sind, welche im Wesentlichen aus Platten bestehen, welche im Wasserlauf angeordnet sind und deren vertikale Distanzen zueinander in Fließrichtung abnehmen. Anschließend des Flüssigkeitsablaufs des Wasserrads können gemäß einem weiteren Merkmal der Erfindung Diffuserelemente angeordnet sein, welche im Wesentlichen aus Platten bestehen, welche im Wasserlauf angeordnet sind und deren vertikale Distanzen zueinander in Fließrichtung zunehmen. Durch die Beschleunigerelemente wird ein Maximum an Aufprallgeschwindigkeit in der jeweiligen Kammer des Wasserrads in welche die Flüssigkeit einströmt erreicht. Die Diffuserelemente verlangsamen die Flüssigkeit im Flüssigkeitsablauf des Wasserrads, wodurch keine Energie durch ein zu schnelles Abfließen des Wassers verloren geht, sondern optimal durch das Wasserrad genutzt werden kann.

Es ist ein weiteres Merkmal der Erfindung, dass innerhalb des luftdichten Mantels in jeder einzelnen Kammer schwenkbare Gitter angeordnet sind, welche jeweils mittels einer hinter jeder Kammer angeordneten Verstelleinrichtung, beispielsweise durch einzelne Hydraulikzylinder gebildet, in den Kammerraum eingeschwenkt werden können und somit eine Begrenzung für die luftdichte Membran darstellen, wodurch das Kammervolumen durch Voreinstellung der Schwenkgitter einstellbar ist. Je nach verfügbarer Wassermenge werden die Schwenkgitter durch beispielsweise vorgesehene Hydraulikzylinder in den Kammerraum eingeschwenkt und bieten daher beim Komprimieren der luftdichten Membranen einen Widerstand. Das Kammervolumen ist dadurch jeweils durch die an den Schwenkgittern anliegende luftdichte Membran im gefüllten Zustand begrenzt. Dadurch ist es möglich das Kammervolumen des Wasserrads bei unterschiedlichem Wasserstand anzupassen und so optimal auf die verfügbare Wassermenge einzustellen.

### Kurze Beschreibung der Zeichnungsfiguren

Die Erfindung wird nun anhand der beiliegenden Figuren näher beschrieben, wobei
Fig. 1 einen Schnitt durch eine erfindungsgemäße Wasserradanlage zeigt,
Fig. 2 eine geschnittene Detailansicht durch einige Kammern des Wasserrads mit darin angeordneten Schwenkgittern zeigt und
Fig. 3 eine Detailaufsicht auf ein Schwenkgitter zeigt.

### Beschreibung der Ausführungsarten

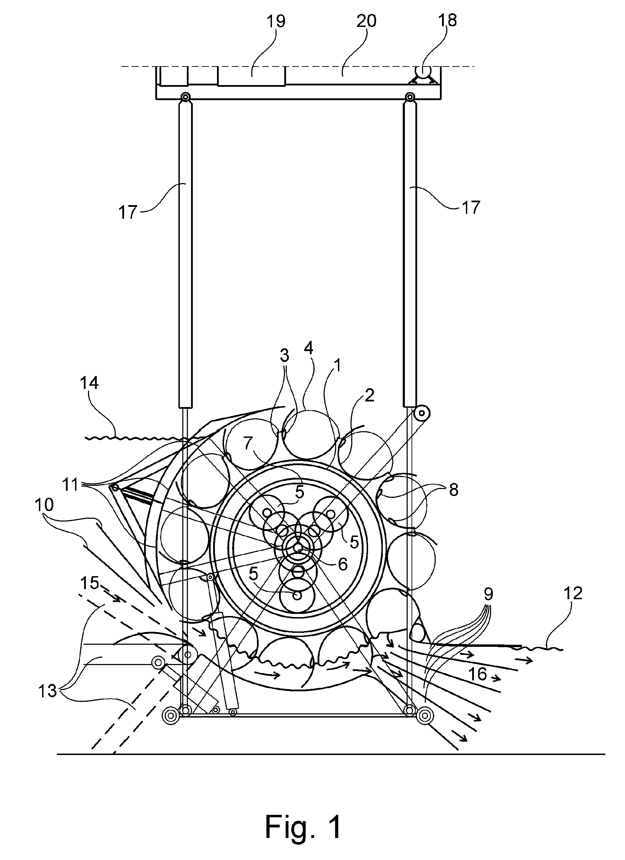

Die in Fig. 1 dargestellte Wasserradanlage zeigt ein mit einzelnen Kammern 2 bestücktes Wasserrad mit einem achsnah gelegenen Getriebe 5, welches die aufgenommene Energie auf eine zentrale Welle 6 und daran angeschlossene Generatoren überträgt.

Eine Hohlwelle 1, die das Getriebe 5 und die Zentralwelle 6 umschließt, bildet zusammen mit luftdichten Membranen 4 in den einzelnen Kammern 2 des Wasserrads einen luftdichten Mantel. In diesem Mantel herrscht ein Überdruck von 0,1-0,3 bar oder höher, je nachdem wie viel Stauhöhe 14 für die Wasserradanlage zur Verfügung steht.

Die Arbeitsweise der Wasserradanlage beruht darauf, dass die Kraft von den Kammern 2 des Wasserrads über die Hohlwelle 1 auf das Getriebe 5 geleitet wird. Das Getriebe 5 wird beispielsweise durch ein Umlaufgetriebe mit drei Umlaufrädern gebildet, welche durch den innen an der Hohlwelle 1 angeordneten Zahnkranz 7 bewegt werden. Durch die Umlaufräder wird die Drehzahl einer zentralen Achse 6 erhöht, an welcher dann ein oder mehrere Generatoren zur Energiegewinnung angeschlossen sind. Das Wasser wird unter- oder mittelschlächtig den Kammern 2 des Wasserrads zugeführt. Die in den Kammern 2 angeordneten luftdichten Membranen 4, werden in der jeweiligen Kammer 2 in der das Wasser einströmt nach innen in Richtung Kammergrund gedrückt. Durch Öffnungen 8 im Kammerboden verteilt sich die verdrängte Luft im luftdichten Mantel und drückt die luftdichte Membran 4 in jener Kammer 2 in der das Wasser ausströmt nach außen bis sie ihre Ausgangslage erreicht hat. Dadurch wird der in der ausströmenden Kammer 2 entstehende Unterdruck aufgehoben und das Wasser sofort entlassen. Andernfalls würde das Wasser durch den Unterdruck noch angehoben werden, was den Wirkungsgrad des Wasserrads schmälern würde.

Ein an der Wasserradanlage angeordneter Kompressor 18 ist mit dem luftdichten Mantel verbunden und reguliert den Luftdruck im Inneren des Mantels.

Anschließend an den Auslass 16 des Wasserrads sind Diffuserelemente 14 angeordnet, welche die Geschwindigkeit des auslaufenden Wassers ins Unterwasser 12 reduzieren und somit den Wirkungsgrad des Wasserrades verbessern.

Im Einlassbereich 15 ist als Schott 11 ein Halbrohr montiert, welches zur Gänze vor dem Wasserrad beweglich ist. Das Wasser somit aufstaut und so die gewünschte Stauhöhe 14 erreicht wird. Die einströmende Wassermenge sowie die Stauhöhe 14 kann durch verschwenken dieses Schotts 11 eingestellt werden.

Vor diesem Wasserzulauf 15 sind konusartig geformte Bleche im Wasserlauf als Beschleunigerelemente 10 montiert, welche die Aufprallgeschwindigkeit des Wassers auf die Kammern 2 des Wasserrades erhöhen.

Die gesamte Wasserradanlage ist höhenverstellbar, beispielsweise durch Hydraulikeinrichtungen 17, montiert und kann so der Wasserhöhe des Wasserlaufs angepasst werden. Eine im Zulauf 15 montierte bewegliche Platte 13 dichtet den Zulauf 15 je nach Höhe der Anlage ab und sorgt für eine gleichmäßige Wasserzufuhr. Bei Hochwasser kann auch die gesamte Wasserradanlage aus dem Wasser gehoben werden, wodurch Beschädigungen vermieden werden. Die Steuerung und elektrische Ausrüstung 19 ist in einer Schaltwarte 20 oberhalb der Anlage, und damit ebenfalls von Hochwasser geschützt, montiert.

Die Wasserradanlage ist als Langsamläufer mit einem hohen Drehmoment ausgebildet. Das Hohe Drehmoment wird über die Umlaufräder auf die kleinere Zentralwelle übersetzt, sodass diese mit höherer Drehzahl läuft. Dadurch wird der Verschleiß der Anlage möglichst gering gehalten.

Die an der Innenseite der Kammern 2 montierten luftdichten Membranen 4 sind vorzugsweise Gummimembranen, welche über einen verschraubbaren Vorsprung 3 befestigt sind. Dieser Vorsprung 3 ist abgerundet und verhindert ein gänzliches Umknicken der Membranen 4 nach Innen, wodurch Risse vermieden werden.

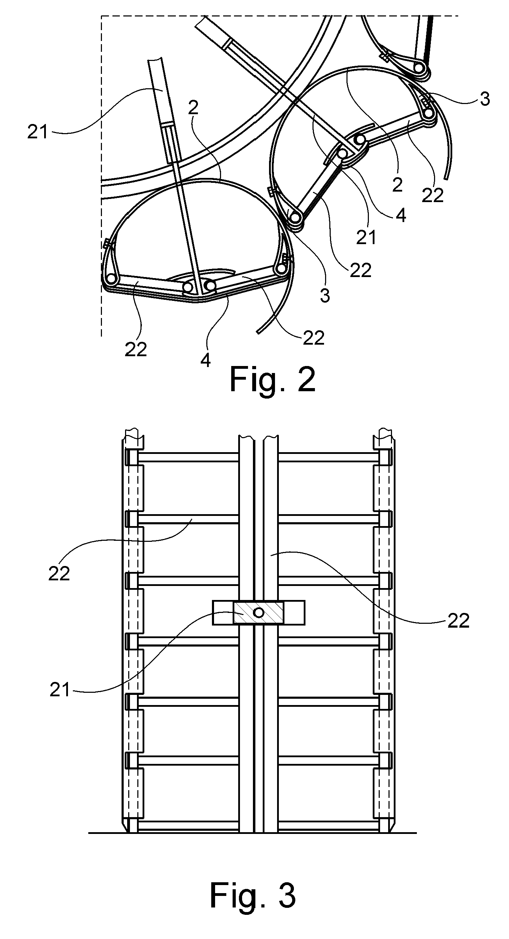

Damit die Stoßenergie des eintretenden Wassers effektiv genutzt werden kann ist es wie in den Fig. 2 und 3 gezeigt vorgesehen, in den Kammern schwenkbare Gitter 22 vorzusehen, welche einen Anschlag für die luftdichten Membranen 4 darstellen und somit das Kammervolumen je nach Wassermenge begrenzen. Die schwenkbaren Gitter 22 können ebenfalls an den verschraubbaren Vorsprüngen 3 montiert sein und mittels beispielsweise hydraulisch beweglicher Zylinder als Verstelleinrichtung 21 verstellt werden, um das Kammervolumen auf die jeweils verfügbare Wassermenge optimal einzustellen.

## Patentansprüche

1. Wasserradanlage für den Einsatz als unterschlächtiges oder mittelschlächtiges Wasserrad, umfassend ein drehbar an einer Welle (6) gelagertes Schaufelrad, wobei durch einzelne Schaufeln Aufnahmekammern (2) für die einströmende Flüssigkeit gebildet sind, und wobei die Kraftübertragung über die Welle (6) des Wasserrads auf zumindest einen Generator übertragbar ist, und wobei in jeder Kammer (2) eine luftdichte Membran (4) angeordnet ist, **dadurch gekennzeichnet, dass** durch die Gesamtheit der luftdichten Membranen (4) ein luftdichter Mantel um das Wasserrad gebildet ist, in welchem die Luft zwischen den Kammern (4) frei strömen kann, und wobei in dem Mantel ein Luftdruck herrscht, welcher es erlaubt, dass die Membran (4) in der jeweiligen Kammer (2), in welcher die Flüssigkeit einströmt, in Richtung des Kammergrunds komprimierbar ist und gleichzeitig durch Umverteilung der Luft im Mantel die Membran (4) in der Kammer (2), in welcher die Flüssigkeit ausströmt, nach außen in die Ausgangslage bewegbar ist, wodurch das Ausströmen der Flüssigkeit aus der jeweiligen Kammer (2) begünstigt ist.

2. Wasserradanlage nach Anspruch 1, **dadurch gekennzeichnet, dass** der Druck im luftdichten Mantel durch einen angeschlossenen Kompressor (18) steuerbar ist.

3. Wasserradanlage nach Anspruch 1 oder 2, **dadurch gekennzeichnet, dass** im Inneren jeder Kammer (2) abgerundete Vorsprünge (3) angeordnet sind, welche ein Rückfalten der Membranen (4) und das Ausbilden von Knickstellen in den Membranen (4) beim Komprimieren verhindern.

4. Wasserradanlage nach einem der Ansprüche 1 bis 3, **dadurch gekennzeichnet, dass** das Wasserrad auf einer Hohlwelle (1) montiert ist, welche in ihrem Inneren ein Getriebe (5) aufweist, welches mit einer zentralen Welle (6) in Verbindung steht und die Drehzahl der Hohlwelle (1), in Richtung der zentralen Welle (6) hin erhöht, wobei das Getriebe (5) vorzugsweise durch ein Umlaufrädergetriebe mit mindestens drei Umlaufrädern gebildet ist.

5. Wasserradanlage nach einem der Ansprüche 1 bis 4, **dadurch gekennzeichnet, dass** auf der zentralen Welle (6) mehrere Generatoren in der Wellenflucht hintereinander angeordnet sind und separat oder gemeinsam mit der Welle (6) koppelbar sind.

6. Wasserradanlage nach einem der Ansprüche 1 bis 5, **dadurch gekennzeichnet, dass** ein an der Anlage angeordnetes Schott (11) vorgesehen ist, welches im Wesentlichen aus einem konzentrisch zum Wasserrad angeordneten Zylinderabschnitt gebildet wird, wobei das Schott (11) bevorzugt über die Welle (6) oder die Lagerung des Wasserrads an der Anlage schwenkbar montiert ist, und wobei durch Schwenken des Schotts (11) die Stauhöhe (14) sowie die Durchflussmenge der Flüssigkeit regulierbar ist.

7. Wasserradanlage nach einem der Ansprüche 1 bis 6, **dadurch gekennzeichnet, dass** die gesamte Wasserradanlage höhenverstellbar angeordnet ist, wodurch die Anlage an unterschiedliche Pegelstände anpassbar ist und bei Hochwasser aus dem Strömungslauf durch Anheben entfernbar ist.

8. Wasserradanlage nach einem der Ansprüche 1 bis 7, **dadurch gekennzeichnet, dass** vor dem Flüssigkeitszulauf (15) des Wasserrads Beschleunigerelemente (10) angeordnet sind, welche im Wesentlichen aus Platten bestehen, welche im Wasserlauf angeordnet sind und deren vertikale Distanzen zueinander in Fließrichtung abnehmen.

9. Wasserradanlage nach einem der Ansprüche 1 bis 8, **dadurch gekennzeichnet, dass** anschließend des Flüssigkeitsablaufs des Wasserrads Diffuserelemente (9) angeordnet sind, welche im Wesentlichen aus Platten bestehen, welche im Wasserlauf angeordnet sind und deren vertikale Distanzen zueinander in Fließrichtung zunehmen.

10. Wasserradanlage nach einem der Ansprüche 1 bis 9, **dadurch gekennzeichnet, dass** innerhalb des luftdichten Mantels in jeder einzelnen Kammer (2) schwenkbare Gitter (22) angeordnet sind, welche jeweils mittels einer hinter jeder Kammer angeordneten Verstelleinrichtung (21), beispielsweise durch einzelne Hydraulikzylinder gebildet, in den Kammerraum eingeschwenkt werden können und somit eine Begrenzung für die luftdichte Membran (4) darstellen, wodurch das Kammervolumen durch Voreinstellung der Schwenkgitter (22) einstellbar ist.
